# EUROPEAN PATENT SPECIFICATION

(11) **EP 1 080 403 B1**
(45) Date of publication and mention of the grant of the patent: **21.08.2002**
(21) Application number: 99924951.9
(22) Date of filing: 11.05.1999
(51) Int. Cl.: G06F 3/033, G06F 3/023

(54) **USER TERMINAL**
GEBRAUCHERTERMINAL
TERMINAL UTILISATEUR

(30) Priority: 20.05.1998 NL 1009239
(43) Date of publication of application: 07.03.2001
(73) Proprietor: Koninklijke KPN N.V., 9726 AE Groningen (NL)
(72) Inventor: BAKKER, Maurice, Vincent, Hugo, NL-2261 CX Leidschendam (NL); VAN DER ROS, Ellen, Mirjam, NL-2565 CV Den Haag (NL); MANNAK, Jacobine, Johannette, NL-2593 VH Den Haag (NL); RIETKERK, Oscar, Dick, NL-9481 HA Vries (NL); AASMAN, Jannes, NL-2334 AV Leiden (NL)
(74) Representative: Wuyts, Koenraad Maria
(86) International application number: EP9903267
(87) International publication number: WO99060466

(56) References cited:
- EP-A- 0 416 176
- WO-A-92/09030
- WO-A-92/17850
- WO-A-96/03686
- DE-U- 29 611 277
- NL-C- 1 009 301
- KIYOSHI KATO ET AL: "A PORTABLE COMMUNICATION TERMINAL FOR NOVICES AND ITS USER INTERFACE SOFTWARE" IEICE TRANSACTIONS ON COMMUNICATIONS, vol. E78-B, no. 10, 1 October 1995 (1995-10-01), pages 1387-1394, XP000540876
- PATENT ABSTRACTS OF JAPAN vol. 017, no. 390 (P-1577), 21 July 1993 (1993-07-21) & JP 05 066888 A (MATSUSHITA ELECTRIC IND CO LTD), 19 March 1993 (1993-03-19)

## Description

### A. Background of the invention

The invention is related to a user terminal, comprising an electronic workstation, which is controllable by one or more software modules, comprising a screen and pointing means for selection, by a user, of screen objects which are generated by software or hardware modules operating in the workstation, wherein, by selection of such an object, a module, or a sub-module thereof, is activated.

Such a user terminal is known in the prior art, in particular in the form of a personal or network computer with a windows user interface.

By means of a pointer which is controlled for example by a mouse, a track ball or a light pen, an application module (application software program) can be activated, namely by activating, with the pointer, a screen object which represents the application module. For "touch screen" terminals, the pointer is formed by a finger of the user.

### B. Summary of the invention

The applicant proposes a new user interface which is expected to be more manageable by the general public than the current interfaces, of which MS WINDOWS is certainly the most popular.

According to the present invention as set forth in claim 1, the user terminal comprises, as interface for activating application modules (software or hardware), a generic selection module which, in a primary selection field on the screen, generates a number of selection objects for selecting and activating application modules, while the selection module further generates, per application module, a panel-shaped screen object having a uniform structure.

Each panel-shaped screen object comprises panel sliding objects, a central information panel, a vertical left and right side panel and a horizontal upper and a lower panel. With one panel sliding object, the user can shift the whole panel-shaped screen object, including both side panels, lower and upper panel and information panel, in a horizontal direction, whereby the primary selection fields become visible or hidden. Upon activation, a second panel sliding object causes the information panel and both horizontal panels to slide away or back again in a vertical direction alternatively ("toggling").

The vertical side panels comprise selection objects for selecting and activating a sub-module of the activated application module for the generation and display on the central information panel, or for inputting information.

The information displayed in the information field can preferably be shifted (dragged) in horizontal or vertical direction with respect to the frames of the information field by way of the pointing means, which is otherwise known per se, for example from a software module such as ADOBE/ACROBAT.
Reference is made to some related prior-art terminal interfaces:
- WO-9603686-A, disclosing a page manipulation facility for displaying pages of electronically stored data including a function for allowing a user to manipulate a displayed page. Each page includes a region for displaying a title. A user can move or copy displayed pages by pressing an off-screen button which causes the display to animate and show movement of the page, such that the title of the page is shown skewed. When the user has selected a destination for the page, the button is again pressed to cause the page to be replaced in the selected destination. A button is used which has a bistable action to permit pages to be selected for manipulation e.g moving or deletion. If the button is pressed while the page (20) is displayed, the visual representation of the page slides downward and to skew, such that the part of the title remains visible. The page remains is the skewed position until the user presses the button to complete manipulation.
- WO-9209030-A, disclosing an electronic display and data processor which uses visual indications to facilitate page management functions. A display of ring binders on the displayed page allows the user to control information about the page and to easily insert or delete a page. A stylus allows graphical data to be input to the system. The insert or delete will control the present page and arrows displays will move the pages backwards and forwards in the manner of a real book. A control unit stores data and incorporates touch screen technology.
- EP-416176-A, disclosing an electro-optic slate comprising a combined flat panel display and pen sensing surface constructed from non-mechanical, non-emissive display elements, such as liquid crystal display elements. The device also comprises an input pen for manual entry of hand printed text and hand drawn graphics, as well as commands, directly onto the display surface for providing an electronic writing and drawing slate. The display elements themselves are preferably utilised as input pen sense locations. The flat panel display and pen sensing surface is constructed so that there is no display distortion when the input pen is in contact with the surface. Rapid input pen sensing is provided for accommodating natural pen movement on a high resolution, large area display.

### C. Example of embodiment

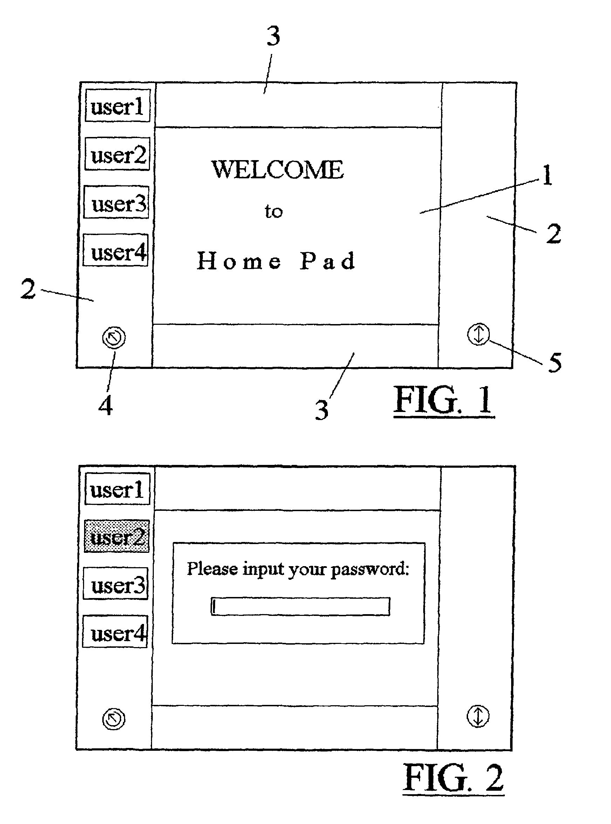

The invention will now be further explained on the basis of a number of figures. Figures 1-8 represent the screen of a user terminal - part of a PC or another system - which is not further shown. Further not shown - since the construction of such a terminal or workstation is generally well known in the prior art - are hardware and software modules and means for inputting alphanumeric or graphical data; also not shown are pointing means, such as a pointer controlled by a mouse or track ball or screen pointer for the selection of screen objects generated by operational software or hardware modules in the terminal, such as (virtual) screen buttons etc., where, by selection of such a screen object, a module (usually an "application"), or a sub-module thereof, is activated.

The present invention represents a generic selection module, which, for the purpose of activating other application modules, generates a number of selection objects in a primary selection field on the screen for selecting and activating an application module. Prior to the presentation of the primary selection fields however, if more users [use] the terminal, a user can log in and authorise himself, which is illustrated in Figs. 1 and 2. Fig. 1 shows a welcome screen. The figure also shows the generic screen composition which also recurs in the following screens, namely a screen object in the form of a panel with a central information panel and vertical and horizontal side panels in which selection and panel sliding objects (buttons) are accommodated.

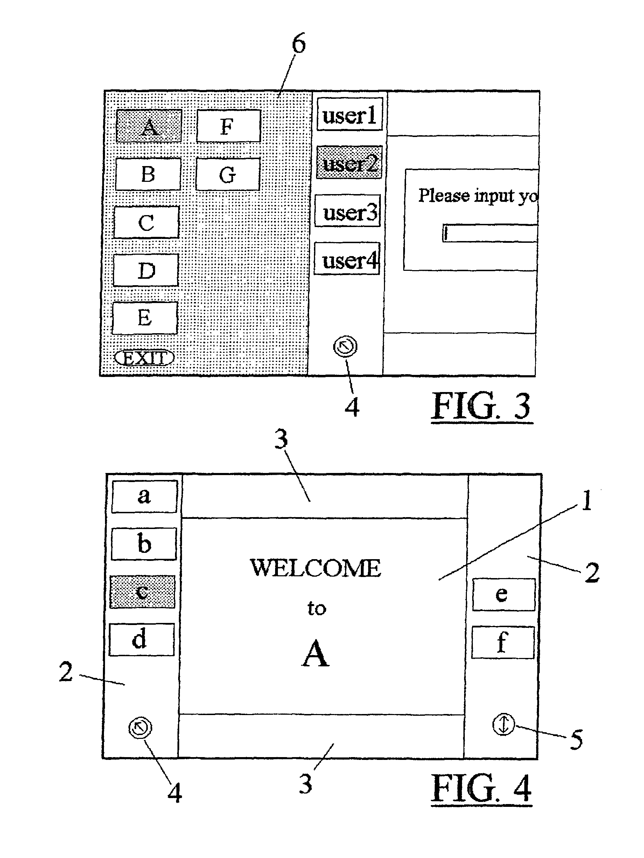

A (registered) user logs in by pressing (by means of the screen pointer) one of the user buttons ("user1", "user2", etc.). The welcome screen of Fig. 1 is then replaced by an input screen for the password, which is shown in Fig. 2. Next, the user can press a panel sliding button 4, causing the panel shown in Fig. 1 to shift half way to the right of the screen, as Fig. 3 shows. If the user thereafter presses button 4 again, the panel moves to the left again. If the panel is shifted to the right, as Fig. 3 shows, the said primary selection fields become visible "behind" it. In the primary selection fields, a number of primary selection objects (selection buttons) are generated for selecting and activating a certain application module (software application), for example "Newspaper news", designated in the figure by the letter A. If that is activated, the selection module generates for that selected application module a panel-shaped screen object, again having the uniform structure. The panel which was shifted to the right then [changes] from a password input panel, as shown in Fig. 3, to a "Welcome at application A ("Newspaper news")" panel, after which said panel shifts to the left, of which Fig. 4 shows the result. The screen object is formed again by panel sliding object 4, a central information panel, a vertical left and right side panel and a horizontal upper and a lower panel.

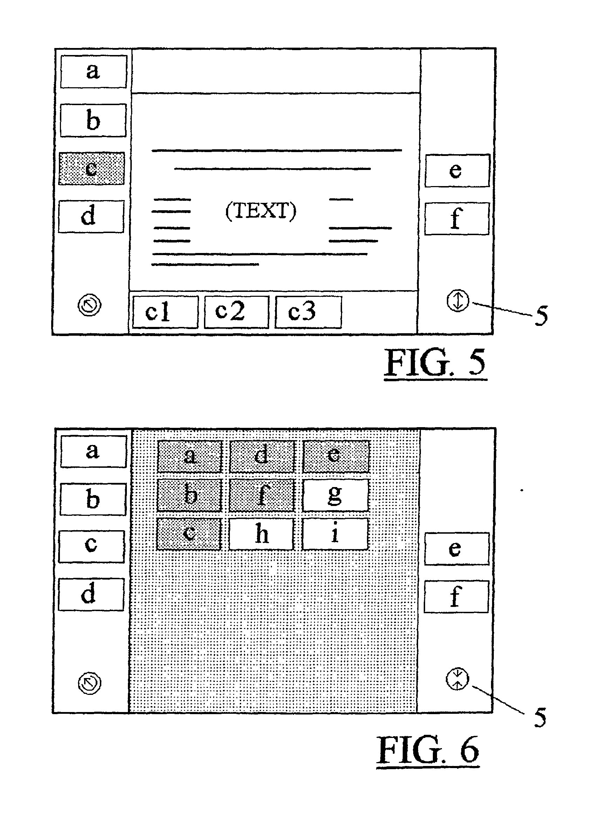

The vertical side panels contain selection objects (buttons) for selecting and activating sub-modules of the activated application module "Newspaper news", namely the selection and activation of certain news groups, for example "Sport", "Business", etc. Fig. 4 shows that the user presses selection button c "Business", so that the image of Fig. 5 comes into being. In the central information field, the first news item of "Business" is generated, namely a message concerning an important telecom provider; a short description of said message is shown on a selection button c1 in the lowest horizontal selection panel 3. Other messages can be selected by means of buttons c2 and c3, which also (not shown) provide a short description of said messages.

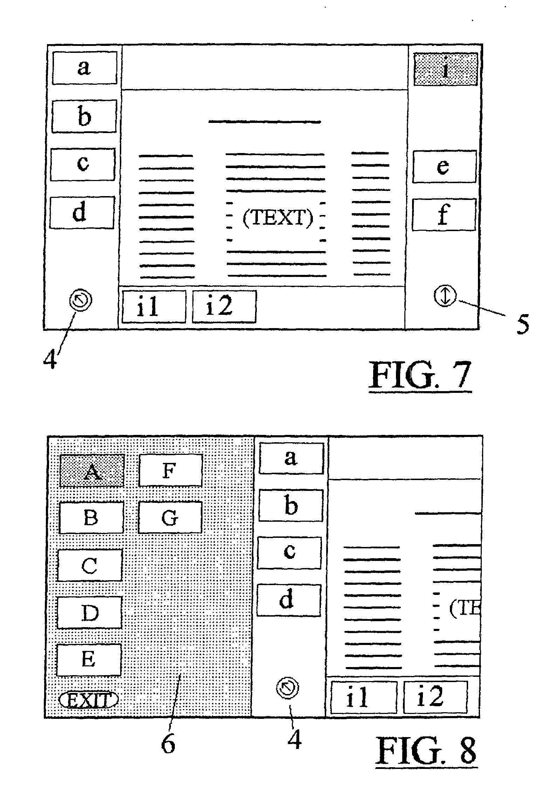

Thus, the vertical side panels contain selection buttons with which sub-modules ("Sport", "Business") within a module ("Newspaper news") can be [selected]. Said selection buttons form a subset of a larger group of sub-module selection buttons. The full set can be inspected by pressing a panel sliding button 5. This causes the bottommost and uppermost horizontal panels 3 and the central panel 1 to shift completely out of view in a vertical direction (for example, the bottommost panel 3 to move down and the central panel 1 and the uppermost panel 3 to move up). In its place, as Fig. 6 shows, the whole collection of selection objects (a...i) related to the activated module ("Newspaper news"), is shown.-From said full set of buttons, the user can then place or [move] back a number of buttons (a...f) on the side panels by "dragging", whereby the side panels can be "personalised". After setting or modifying the preferred buttons in this way, the panel is restored again by pressing the vertical sliding button 5. From Fig. 7 it is evident that the user has added selection button i ("Stock exchange quotations") to the buttons a...f. Pressing button i causes the New York stock exchange quotations to appear in central panel 1. Selection buttons i1 and i2, with which for example the Amsterdam stock exchange quotations can be displayed, are also shown.

It is noted that the information displayed in the information field can be shifted in horizontal or vertical direction with respect to the information field by means of the "pointing means", so that the information, in spite of the limited dimensions of central panel 1, are still readily readable.

Finally, as Fig. 8 shows, the user can arrive in the starting position again by shifting the panel of Fig. 7 to the right again by means of the horizontal sliding button 4, after which another module (A,B,C,....) can be selected or the selection module according to the invention can be left ("EXIT").

## Claims

1. A user terminal, comprising software and hardware modules, a screen and pointing means for selection, by a user, of screen objects which are generated by application modules implemented in software or hardware operating in the terminal, wherein, by selection of such a screen object, such an application module or a sub-module thereof is activated, **characterised by**
a generic selection module which, for the purpose of activating application modules, generates, in a primary selection field (6) on the screen, a number of selection objects (A,B,C,...) for selecting and activating an application module, while the selection module further generates, per application module, a panel-shaped screen object having a substantially uniform structure for all application modules, namely comprising a first and a second panel sliding object (4,5), a central information panel (1), a vertical left and right side panel (2) and a horizontal upper and a lower panel (3),
wherein, upon activation, the first panel sliding object (4) alternatively causes the whole- panel-shaped screen object, including both side panels, lower and upper panel and information panel, to shift away or back again at least partly in a horizontal direction, such that the said primary selection fields (6) become visible and invisible respectively, while the second panel sliding object (5), upon activation, alternatively causes the information panel and both horizontal panels to shift away or back in a vertical direction; -wherein the vertical side panels comprise selection objects (a,b,c,...) for selecting and activating a sub-module of the activated application module for generating and, via the central information panel, displaying or retrieving information;
wherein the horizontal panels, dependent upon the activated module, do or do not comprise selection objects (c1,c2,c3;i1,i2) for the further selection of information which is to be displayed or retrieved by the activated module via the information panel.

2. The user terminal according to Claim 1, **characterised in that** information displayed in the information field by means of the said pointing means can be shifted in horizontal or vertical direction with respect to the information field.

## Patentansprüche

1. Benutzerendgerät mit Softwaremodulen und Hardwaremodulen, mit einem Bildschirm und mit einem Zeigermittel, um einem Benutzer die Auswahl von Bildschirmobjekten zu ermöglichen, die von Anwendungsmodulen erzeugt werden, die in Software oder Hardware implementiert sind, die in dem Endgerät arbeiten, wobei durch Auswahl von solch einem Bildschirmobjekt ein Anwendungsmodul oder ein Untermodul von diesem aktiviert wird, **gekennzeichnet durch**
- ein allgemeines Auswahlmodul, welches zum Zwecke der Aktivierung von Anwendungsmodulen in einem ersten Auswahlfeld (6) auf dem Bildschirm eine Anzahl von Auswahlobjekten (A, B, C) zur Auswahl und Aktivierung von Anwendungsmodulen erzeugt, während das Auswahlmodul weiterhin je Anwendungsmodul ein tafelförmiges Bildschirmobjekt erzeugt, welches eine im wesentlichen gleichförmige Struktur für alle Anwendungsmodule aufweist, nämlich ein erstes und ein zweites tafelverschiebendes Bildschirmobjekt (4, 5), eine zentrale Informationstafel (1), eine vertikale linke und rechte Seitentafel (2) und eine horizontale obere und untere Tafel (3),
- wobei bei einer Aktivierung das erste tafelverschiebende Objekt (4) wechselweise dazu führt, dass das gesamte tafelförmige Bildschirmobjekt, inklusive beider Seitentafeln, der unteren und der oberen Tafel und der Informationstafel, zumindest teilweise in einer horizontalen Richtung wegverschoben oder zurückverschoben wird, so dass die besagten ersten Auswahlfelder (6) sichtbar beziehungsweise unsichtbar werden, während das zweite tafelverschiebende Objekt (5) bei Aktivierung wechselweise dazu führt, dass sich die Informationstafel und beide horizontalen Tafeln in einer vertikalen Richtung wegschieben oder zurückschieben,
- wobei die vertikalen Seitentafeln Auswahlobjekte (a, b, c,...) aufweisen, um ein Untermodul des aktivierten Anwendungsmoduls auszuwählen und zu selektieren, um Information zu erzeugen, oder über die zentrale Informationstafel anzuzeigen oder abzufragen,
- wobei die horizontalen Tafeln in Abhängigkeit von dem aktivierten Modul Auswahlobjekte (c1, c2, c3; i1, i2) umfassen oder nicht umfassen, um weiter Information auszuwählen, die **durch** das aktivierte Modul über die Informationstafel darzustellen oder abzufragen ist.

2. Benutzerendgerät nach Anspruch 1, **dadurch gekennzeichnet, dass** die in dem Informationsfeld angezeigte Information in horizontaler oder vertikaler Richtung in Bezug auf das Informationsfeld durch die besagten Zeigermittel verschoben werden kann.

## Revendications

1. Terminal utilisateur, comprenant des modules logiciels et matériels, un écran et un curseur en vue d'une sélection, par un utilisateur, d'objets d'écran qui sont générés par des modules d'application réalisés en logiciel ou en matériel opérant dans le terminal, dans lequel, par sélection d'un tel objet d'écran, un tel module d'application ou un sous-module de celui-ci est activé, **caractérisé par**
un module de sélection générique qui, dans le but d'activer des modules d'application, génère dans un champ de sélection principal (6) sur l'écran, une pluralité d'objets de sélection (A, B, C,...) afin de sélectionner et d'activer un module d'application, tandis que le module de sélection génère en outre par module d'application, un objet d'écran sous forme de tableau ayant une structure sensiblement uniforme pour tous les modules d'application, notamment comprenant un objet de glissement d'un premier et d'un second tableau (4, 5), un tableau d'information central (1), un tableau latéral gauche et droite vertical (2) et un tableau supérieur horizontal et un tableau horizontal inférieur (3),
dans lequel, après activation, l'objet de glissement du premier tableau (4) amène alternativement la totalité de l'objet d'écran sous forme de tableau, y compris les deux tableaux latéraux, les tableaux inférieur et supérieur et le tableau d'information, à s'écarter ou à revenir à nouveau au moins partiellement dans une direction horizontale, de telle sorte que lesdits domaines de sélection principaux (6) deviennent visibles et invisibles respectivement, tandis que l'objet de glissement du second panneau (5), après activation, amène alternativement le tableau d'information et les deux tableaux horizontaux à s'écarter ou à revenir dans un sens vertical ;
dans lequel les tableaux latéraux verticaux comprennent des objets de sélection (a, b, c,...) pour sélectionner et activer un sous-module du module d'activation activé pour générer, et par l'intermédiaire du tableau d'information central, afficher ou rechercher une information ;
dans lequel les tableaux horizontaux, en fonction du module activé, comportent ou non des objets de sélection (c1, c2, c3 ; i1, i2) pour l'autre sélection d'information qui doit être affichée ou recherchée par le module activé par l'intermédiaire du tableau d'information.

2. Terminal utilisateur selon la revendication 1, **caractérisé en ce que** l'information affichée dans le domaine d'information à l'aide desdits moyens de curseur peut être décalée dans le sens horizontal ou vertical par rapport au domaine d'information.
